# EUROPEAN PATENT APPLICATION

(11) **EP 4 535 616 A1**
(43) Date of publication of application: **09.04.2025**
(21) Application number: 23201893.7
(22) Date of filing: 05.10.2023
(51) Int. Cl.: H02K 1/276

(54) **BRIDGELESS ROTOR FOR AN ELECTRICAL MACHINE**

(71) Applicant: TOYOTA JIDOSHA KABUSHIKI KAISHA, Toyota-shi, Aichi-ken, 471-8571 (JP)
(72) Inventor: SCHUERMANS, Rafael, 1140 BRUSSELS (BE); ENDO, Takahito, 1140 BRUSSELS (BE); MESITI, Letizia, 1140 BRUSSELS (BE)
(74) Representative: Cabinet Beau de Loménie

(57) **Abstract**

A rotor (100) for a synchronous motor, the rotor (100) comprising a plurality of circumferential rotor sectors (30), each rotor sector (30) comprising an inner part (36), a center part (34) and an outer part (32);
wherein the center part (34) and the outer part (32) are only joined by at least one non-ferromagnetic anchor (40); and
wherein the center part (34) and the inner part (36) are only joined by at least two non-ferromagnetic anchors (40).

## Description

### BACKGROUND OF THE INVENTION

### 1. Field of the Invention

The invention relates to the field of Permanent Magnet Synchronous Motors (PMSM), and in particular to a rotor for an Interior Permanent Magnet Synchronous Motors (IPMSM).

### 2. Description of Related Art

The increasing demand for vehicles has led to the rapid development of the automotive industry and the shifting towards vehicle electrification. Hybrid and fully electric vehicles are of increasing interest due to their low or zero emissions nowadays. These types of vehicles can employ different types of electric machines in their drivetrain.

Permanent magnet synchronous motor (PMSM) is the most popular type due to its high power and torque density, high efficiency over a wide speed region, compact design and easy maintenance.

PMSM comprise permanent magnets in a central rotor, producing a stationary magnetic field, and a three-phase winding in a stator, supplied with sinusoidally time-varying current.

An IPMSM is a type of PMSM wherein permanent magnets are embedded inside the rotor.

DE 10 2020 000 800 A1 and DE 10 2019 008 849 A1 disclose two examples IPMSMs.

Designing an IMPSM requires taking into account of extreme stress caused by high rotational speeds and of magnetic field distributions.

A need exists for motors having improved mechanic and magnetic performances.

### SUMMARY OF THE INVENTION

In view of the above problem, a rotor for a synchronous motor as defined in claim 1 is defined, wherein the rotor comprises a plurality of circumferential rotor sectors, each rotor sector comprising an inner part, a center part and an outer part;
wherein the center part and the outer part are only joined by at least one non-ferromagnetic anchor; and
wherein the center part and the inner part are only joined by at least two non-ferromagnetic anchors.

By "inner" (or "inside") and "outer" (or "outside") are understood relative positioning relative to a rotation axis of the rotor. In particular, an "inner part" is comparatively closer to the rotation axis than the outer part.

Typically, the center part is provided between the inner part and the outer part, i.e. radially outside of the inner part and radially inside of the outer part.

By "joined" is meant mechanically joined.

Typically, the center part and the inner part are only joined by two non-ferromagnetic anchors.

By anchor is for example meant a locking element, such as locking with another element having a corresponding shape. Locking may for example involve locking a male part with a corresponding female part.

Such a design makes it possible to ensure mechanical integrity of the rotor using anchors having minimal negative impact on magnetic performance.

The rotor can then achieve high torque output with reduced, or even suppressed, torque ripple and cogging torque.

In particular, the rotor can be deprived of additional flux barriers which require additional fabrication steps, such as in DE 10 2020 000 800 A1, or which limit degree of freedom of design to optimize magnetic performance, such as in DE 10 2019 008 849 A1.

Typically, permanent magnets are provided between the inner part and the center part and between the center part and the outer part.

Typically, the rotor comprises one outer pair of permanent magnets between the center part and the outer part.

Typically, the permanent magnets form therebetween an angle having a value between 150° and 170°.

Typically, the rotor comprises two inner pairs of permanent magnets between the center part and the inner part.

Typically, the permanent magnets of the two inner pairs are oriented in a U shape.

By U shape is understood that the magnets are tilted such that a virtual U could be drawn wherein each magnet is tangent to the virtual U.

Typically, each anchor has two joining ends having a greater cross-section than a center region of the anchor.

Each joining end can be inserted in a corresponding cavity in the center part and the inner part, respectively.

Typically, each anchor comprises austenitic steel.

Austenitic steel is non-magnetic, and therefore has an impact similar to air on magnetic lines, thereby providing mechanical support without disrupting magnetic properties of the motor.

Typically, the rotor comprises eight circumferential rotor sectors, circumferentially arranged around a rotation axis of the rotor.

The present invention also comprises an interior permanent magnet synchronous motor comprising a stator and a rotor according to the present invention.

Such an IPMSM has improved mechanical and magnetic performances.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 Figure 1 is a sectional view of an IPMSM according to previous techniques.
FIG. 2 Figure 2 is an example of a sector of a rotor of an IPMSM according to a first embodiment of the invention.
FIG. 3 Figure 3 is an example of a sector of a rotor of an IPMSM according to a second embodiment of the invention.
FIG. 4 Figure 4 is an example of a sector of a rotor of an IPMSM according to a third embodiment of the invention.
FIG. 5 Figure 5 is an example of a sector of a rotor of an IPMSM according to a fourth embodiment of the invention.
FIG. 6 Figure 6 is an example of an IPMSM comprising a rotor according to the second and fourth embodiments of the invention.
FIG. 7 Figure 7 is an example of an IPMSM comprising a rotor according to the first and third embodiments of the invention.

### DETAILED DESCRIPTION OF EMBODIMENTS

Reference will now be made in detail to a method constituting an exemplar embodiment of the present disclosure. The exemplar embodiment may be modified while remaining within the scope as defined by the claims. The description and the drawings must be understood as illustrative rather than restrictive.

Throughout the description, including the claims, the term "comprising a" should be understood as being synonymous with "comprising at least one" unless otherwise stated. In addition, any range set forth in the description, including the claims should be understood as including its end value(s) unless otherwise stated. Conversely, the use of the plural form may also include the singular form unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

The present disclosure relates to a rotor for a synchronous motor, and in particular for an IPMSM.

Hereunder, the IPMSM and its parts will be described along sectional views.

Naturally, the IPMSM, the stator and the rotor extend along a rotation axis X, such that the IPMSM has the shape of a circular right cylinder.

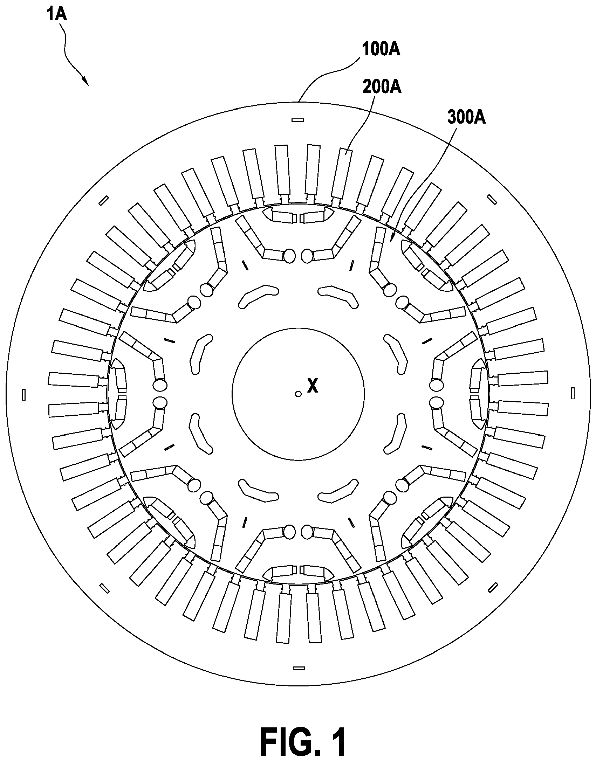

An example of a conventional IPMSM 1A is shown in Fig. 1.

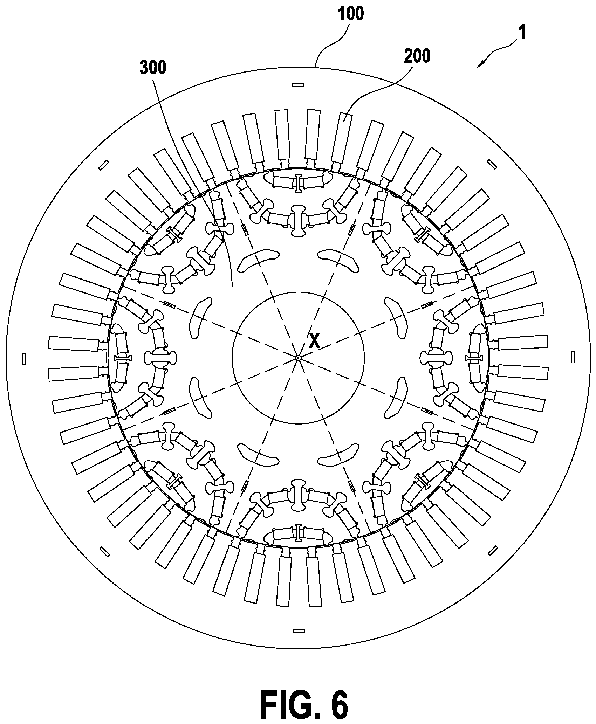

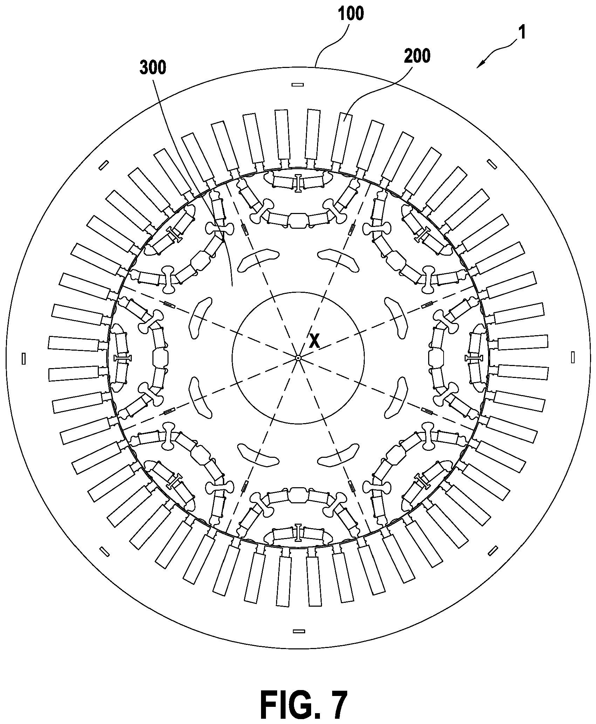

Examples of IPMSMs 1 according to the invention are shown in Figs. 6 and 7.

An IPMSM comprises a stator 100,100A; a winding 200,200A circumferentially wound in the stator 100,100A; and a rotor 300,300A rotationally provided radially inside the stator 100,100A.

The winding 200,200A includes a three-phase winding that can supplied from a power source (not shown) providing sinusoidal current.

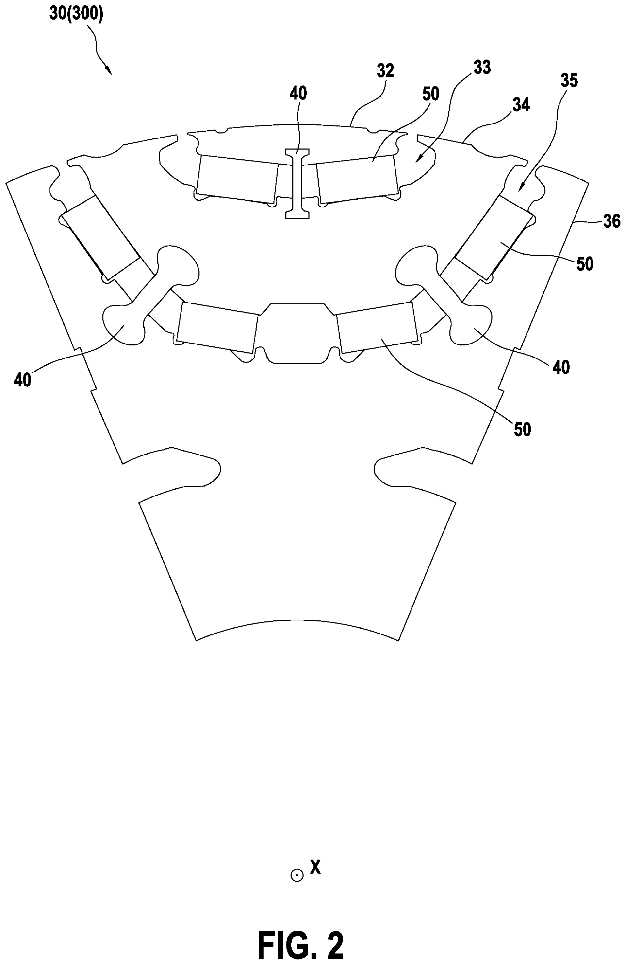

The invention is in particular focused on the structure of the stator 100,100A, which will be described with reference to Figs. 2 to 5 and Figs. 6 and 7.

The rotor 300 comprises rotor sectors 30. For example, the rotor 300 is made of a plurality of rotor sectors 30.

Division between rotor sectors 30 is identified with dashed lines in Figs. 6 and 7. It is understood that this division is only functional, and do not necessarily imply that assembly steps are required between two rotor sectors. For instance, the center parts 34 (described below) of the rotor sectors 30 as a whole (i.e. not individually) may be of unibody construction.

In the first to fourth embodiments, the rotor 300 comprises eight rotor sectors 30. However, it is understood that the number of rotor sectors 30 is not limited to such a number.

The rotor sector 30 comprises an inner part 36, a center part 34 and an outer part 32.

The center part 34 is radially inside the outer part 32. The inner part 36 is radially inside the center part 34, and consequently also radially inside the outer part 32.

The inner part 36, the center part 34 and the outer part 32 can be formed separately, and subsequently assembled.

In other words, a first through hole 33 separates the outer part 32 from the center part 34 ; and a second through hole 35 separates the center part 34 from the inner part 36.

The first through hole 33 and the second through hole 35 are provided so as to be positionable substantially facing the winding 200. In other words, the angular gap between consecutive ends of through holes 33,35 can be equal to the angular gap between consecutive slots of the winding 200 or a multiple thereof.

For example, a rotor sector 30 may span across six consecutive slots of a winding 200, wherein the two centermost slots among the six consecutive slots do not face ends of through holes 33,35.

One or more anchors 40 can be provided so as to join the outer part 32 and the center part 34.

Two or more anchors 40 can be provided so as to join the inner part 36 and the center part 34.

Anchors 40 are typically provided in a non-ferromagnetic material. For example, anchors 40 comprise austenistic steel or stainless steel.

For example, anchors 40 comprise austenistic stainless steel.

The anchors 40 typically comprise a center part and two ends provided so as to lock in a corresponding cavity in the inner part 36, the center part 34 and/or the outer part 32.

One or more magnets 50 may be provided between the outer part 32 and the center part 34, and/or between the center part 34 and the outer part 36.

Magnets 50 are typically permanent magnets 50. For example, magnets 50 may be ferrite (Fe) magnets, samarium cobalt (SmCo), neodymium magnets such as neodymium iron boron (NdFeB) magnets, or any other type of permanent magnets.

In other words, the magnets 50 may be provided in the first through hole 33 and/or the second through hole 35.

The surfaces of the outer part 32, the center part 34 and the outer part 36 may have lips and/or grooves for positioning receiving the magnets 50, for example to hold the magnets 50 in a certain position along the first through hole 33 and the second through hole 35.

Such anchors 40 provide a mechanic support without hindering magnetic flux in the rotor due to their non-ferromagnetic nature.

As an advantage of using such anchors 40, no additional bridges are required for mechanical support between the inner part 36 and the center part 34, or between the center part 34 and the inner part 32, unlike conventional rotors 1A such as the rotor of Fig. 1.

The anchors 40 being magnetically inert, from a magnetic point of view only magnets 50 are provided in the first through hole 33 and in the second through hole 35, and therefore the magnetic flux is not hindered along the first through hole 33 and the second through hole 35, leading to reduced leakage of magnetic flux.

Such a design thereby provides for an IPMSM having higher torque and lower torque ripple.

As shown in the embodiments of Figures 2 to 5, exactly one anchor 40 may be provided between the center part 34 and the outer part 32.

Two magnets 50 may be provided between the center part 34 and the outer part 32. For example, the anchor 40 between the center part 34 and the outer part 32 may be provided between the two magnets 50.

This structure provides for satisfying mechanical support of the outer part 32 relative to the center part 34.

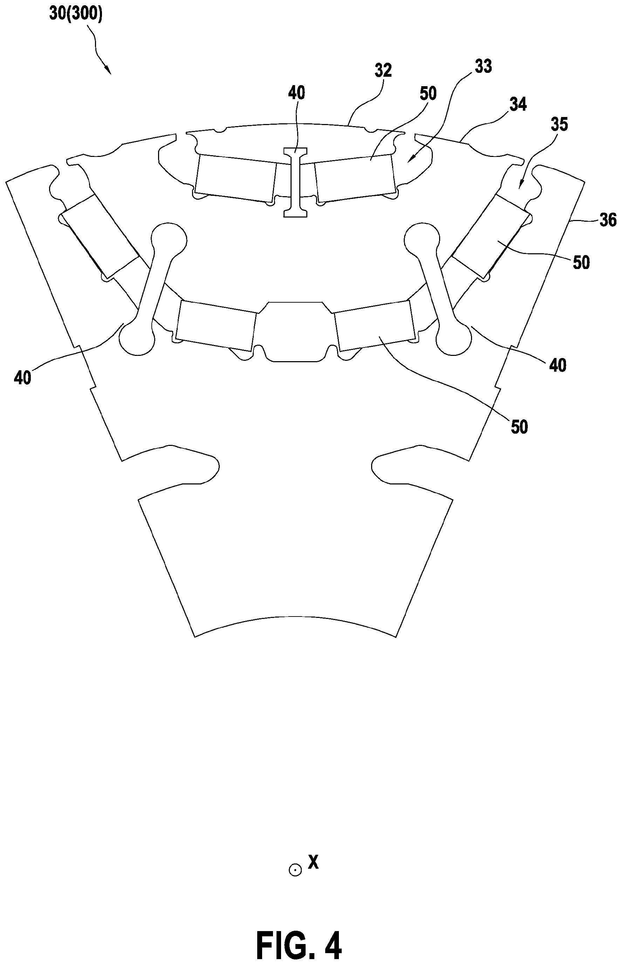

As shown in the embodiments of Figures 2 and 4, exactly two anchors 40 may be provided between the center part 34 and the outer part 32.

The anchors 40 may have a shape a right cylinder, i.e. extending along the axis X from a base having the above-described shape.

The anchors 40 may extend over more than 75%, for example over 90% of the length of the rotor 100 measured along the axis X, for example over 100% of the length of the rotor 100.

Two pairs of magnets 50 ("inner pairs") may be provided between the inner part 36 and the center part 34. For example, the two anchors 40 formed between the center part 34 and the outer part 32 may be provided between each pair of magnets 50.

Magnets 50 are oriented along the through hole 33, 35 in which they are provided.

The orientation of magnets 50 corresponds to the magnetic orientation of the magnets 50 from the south pole to the north pole, i.e. to an oriented axis. In the example of Figs. 2 to 5, the orientation of magnets 50 is parallel to the direction of length of the magnets 50, which is not oriented.

In other words, magnets 50 are provided such that, at the position in the first through hole 33 or in the second through hole 35 where magnets 50 are provided, the orientations of magnets 50 are tangential to the direction of the corresponding through hole 33,35.

This provides for efficient distribution of magnetic flux with respect to winding 200.

Magnets 50 may have an angle having a value between 150° and 170° therebetween.

The angle between magnets 50 is the angle between their orientations.

This ensures efficient distribution of magnetic flux with respect to winding 200.

For instance, consecutive magnets 50 in the same through hole 33, 35 may have therebetween an angle having a value between 10° and 30°.

Magnets 50 of the inner pairs may be oriented in a U shape.

In other words, the angle between the direction of an outermost magnet 50 and the direction of second magnet 50 increases from the directly consecutive magnet 50 to the other opposite outermost magnet 50.

Alternately, the orientation of each magnet 50 excluding the outermost magnets 50 is in the range of the orientations of its directly consecutive magnets 50, wherein the orientation is measured in a plane normal to the rotation axis X, with respect to a fixed arbitrary reference orientation.

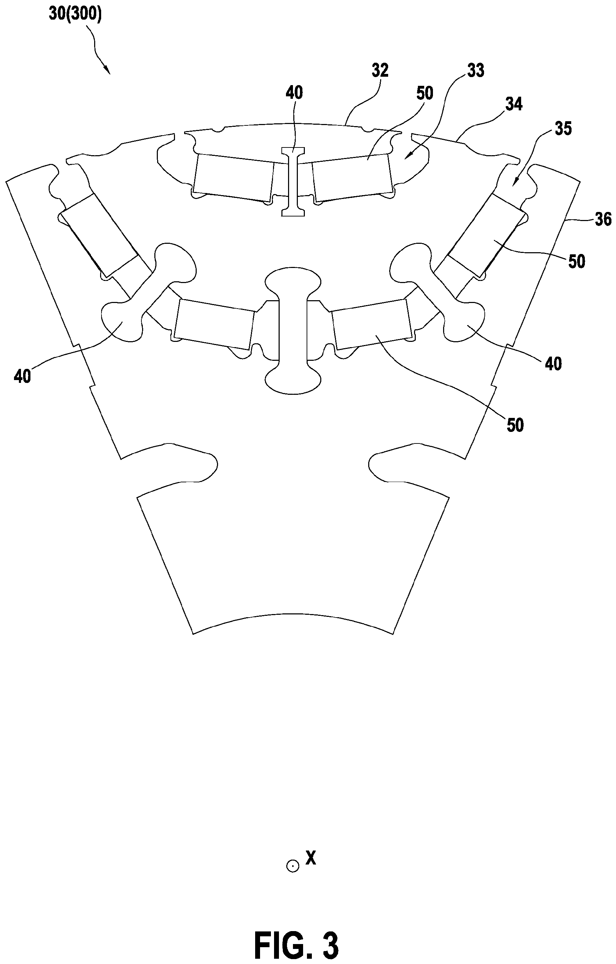

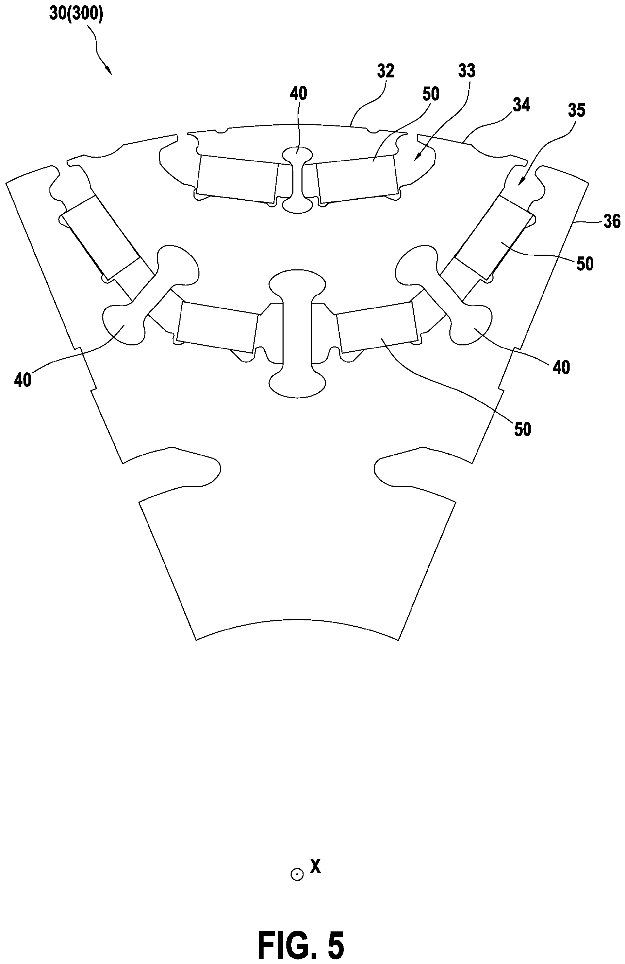

As shown in the embodiments of Figures 3 and 5, exactly three anchors 40 may be provided between the center part 34 and the outer part 32.

The embodiments of Figures 3 and 5 may correspond to the embodiments of Figures 2 and 4 wherein an additional anchor 40 is provided, between the two pairs of anchors 40.

These structures provide for satisfying compromise between mechanical support and facilitated assembly.

As shown in the embodiments of Figs. 2 to 5, the anchors 40 and magnets 50 may be symmetrical along a virtual plane (not shown) formed by a radial direction and the rotation axis X.

Such a symmetry makes is possible to improve mechanical support, especially with respect to extreme centrifugal forces the IPMSM can be subjected to.

The anchor 40 may have two joining ends on both ends of a center region of the anchor 40.

The center region may be substantially rectilinear, extending along a main direction of the anchor 40.

The two joining ends of the anchor 40 may be identical.

The two joining ends may have a greater cross-section than the center region, wherein the cross-section is measured perpendicular to the main direction of the anchor.

The joining ends may have a substantially ovoid or ellipsoidal shape, such as the anchors 40 provided in the second through hole 35 in the embodiments of Figs. 2, 3 and 5.

In particular, the joining ends may have a substantially circular shape, such as the anchors 40 provided in the second through hole 35 in the embodiments of Fig. 4.

The anchors 40 may have a profile in the shape of a capital I, i.e. comprising two substantially rectilinear joining ends spanning perpendicularly to the center part, such as the anchors 40 in the first through hole 33 in the embodiments of Figures 2 to 4.

The anchors 40 may have a fillet between the joining ends and the center region, so as to reduce stress concentration and improve mechanical resistance

The embodiments of Figs. 2 to 5 differ in the number, positioning, shape, and/or angle of the anchors 40 so as to discuss variations of such individual features.

Naturally, unless stated otherwise, any combination of such individual features of anchors 40 of the embodiments of Figs. 2 to 5 can be considered.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A rotor (100) for a synchronous motor, the rotor (100) comprising a plurality of circumferential rotor sectors (30), each rotor sector (30) comprising an inner part (36), a center part (34) and an outer part (32);
wherein the center part (34) and the outer part (32) are only joined by at least one non-ferromagnetic anchor (40); and
wherein the center part (34) and the inner part (36) are only joined by at least two non-ferromagnetic anchors (40).

2. The rotor (100) according to claim 1, wherein the center part (34) and the inner part (36) are only joined by two non-ferromagnetic anchors (40).

3. The rotor (100) according to claim 1 or claim 2, wherein permanent magnets (50) are provided between the inner part (36) and the center part (34) and between the center part (34) and the outer part (32).

4. The rotor (100) according to claim 3, comprising one outer pair of permanent magnets (50) between the center part (34) and the outer part (32).

5. The rotor (100) according to claim 4, wherein the permanent magnets (50) form therebetween an angle having a value between 150° and 170°.

6. The rotor (100) according to any of claim 3 to 5, comprising two inner pairs of permanent magnets (50) between the center part (34) and the inner part (36).

7. The rotor (100) according to claim 6, wherein the permanent magnets (50) of the two inner pairs are oriented in a U shape.

8. The rotor (100) according to any of claims 1 to 7, wherein each anchor (40) has two joining ends having a greater cross-section than a center region of the anchor (40).

9. The rotor (100) according to any of claims 1 to 8, wherein each anchor (40) comprises austenitic steel.

10. The rotor (100) according to any of claims 1 to 9, comprising eight circumferential rotor sectors (30), circumferentially arranged around a rotation axis (X) of the rotor (100).

11. Interior permanent magnet synchronous motor (1) comprising a stator (300) and a rotor (100) according to any of the previous claims.

## Amended claims

### Amended claims in accordance with Rule 137(2) EPC.

1. A rotor (100) for a synchronous motor, the rotor (100) comprising a plurality of circumferential rotor sectors (30), each rotor sector (30) comprising an inner part (36), a center part (34) and an outer part (32);
wherein the center part (34) and the inner part (36) are only joined by at least two non-ferromagnetic anchors (40), **characterized in that**
the center part (34) and the outer part (32) are only joined by one non-ferromagnetic anchor (40).

2. The rotor (100) according to claim 1, wherein the center part (34) and the inner part (36) are only joined by two non-ferromagnetic anchors (40).

3. The rotor (100) according to claim 1 or claim 2, wherein permanent magnets (50) are provided between the inner part (36) and the center part (34) and between the center part (34) and the outer part (32).

4. The rotor (100) according to claim 3, comprising one outer pair of permanent magnets (50) between the center part (34) and the outer part (32).

5. The rotor (100) according to claim 4, wherein the permanent magnets (50) form therebetween an angle having a value between 150° and 170°.

6. The rotor (100) according to any of claim 3 to 5, comprising two inner pairs of permanent magnets (50) between the center part (34) and the inner part (36).

7. The rotor (100) according to claim 6, wherein the permanent magnets (50) of the two inner pairs are oriented in a U shape.

8. The rotor (100) according to any of claims 1 to 7, wherein each anchor (40) has two joining ends having a greater cross-section than a center region of the anchor (40).

9. The rotor (100) according to any of claims 1 to 8, wherein each anchor (40) comprises austenitic steel.

10. The rotor (100) according to any of claims 1 to 9, comprising eight circumferential rotor sectors (30), circumferentially arranged around a rotation axis (X) of the rotor (100).

11. Interior permanent magnet synchronous motor (1) comprising a stator (300) and a rotor (100) according to any of the previous claims.
